# DEMANDE DE BREVET EUROPEEN

(11) **EP 3 290 774 A1**
(43) Date de publication de la demande: **07.03.2018**
(21) Numéro de dépôt: 17185071.2
(22) Date de dépôt: 07.08.2017
(51) Int. Cl.: F21S 8/00, F21V 5/00

(54) **MODULE D ÉCLAIRAGE A ECRAN DIFFRACTIF POUR VEHICULE AUTOMOBILE**

(30) Priorité: 06.09.2016 FR 1658254
(71) Demandeur: Valeo Vision, 93012 Bobigny Cedex (FR)
(72) Inventeur: PELLARIN, Marie, 93012 BOBIGNY Cedex (FR); BOURDIN, David, 93012 BOBIGNY Cedex (FR)

(57) **Abrégé**

L'invention propose un module d'éclairage pour véhicules automobiles, qui comprend des moyens optiques pour dévier de manière angulaire au moins une partie des rayons lumineux qui les traversent, sans pour autant changer la géométrie de la lentille de projection du module d'éclairage.

## Description

L'invention a trait au domaine des projecteurs d'éclairage, notamment pour véhicule automobile. L'invention traite d'un module d'éclairage ayant des moyens optiques aptes à dévier de manière prédéterminée au moins une partie des rayons lumineux issus d'au moins une source lumineuse du module.

Un véhicule automobile est équipé de projecteurs, ou phares, destinés à illuminer la route devant le véhicule, la nuit ou en cas de luminosité réduite. Il est connu d'utiliser des sources lumineuses à éléments semi-conducteurs tels que des diodes électroluminescentes, LED, pour créer des faisceaux lumineux. Un même module lumineux peut notamment être utilisé pour implémenter plusieurs fonctions lumineuses d'un véhicule automobile, comme par exemple les fonctions « code » ou « feux de route ». De manière générale, les rayons lumineux issus d'une source lumineuse, qui peut être composée d'une pluralité de sources lumineuses élémentaires telle que des éléments LEDs, sont dirigées dans une direction commune prédéterminée par un système optique comprenant des lentilles de projection et/ou des éléments réflecteurs, afin d'assurer une empreinte lumineuse prédéterminée. Pour réaliser certaines fonctions lumineuses réglementaires, il peut cependant devenir nécessaire de dévier au moins une partie des rayons lumineux d'un faisceau dans une direction autre que cette direction commune. Ceci est par exemple le cas pour l'illumination des portiques autoroutiers indiquant les directions aux automobilistes. Il est connu de produire des lentilles de projection ayant des structures optiques tels que des prismes ou des tores façonnés dans le verre constituant la lentille, sur une partie de leur face d'incidence. Les rayons lumineux incidents sur cette partie de surface de la lentille sont déviés de manière prédéterminée, tandis que les rayons incidents hors de cette partie de surface sont dirigés dans la direction principale commune, généralement selon l'axe optique de la lentille. La production de telles lentilles est cependant compliquée et onéreuse. En plus, les structures optiques sont visibles sur la lentille depuis l'extérieur du véhicule, ce qui n'est pas souhaitable pour certaines applications.

L'invention a pour objectif de pallier à au moins un des problèmes posés par l'art antérieur. Plus précisément, l'invention a pour objectif de proposer un dispositif qui permet de dévier de manière prédéterminée au moins une partie des rayons lumineux issus d'une source lumineuse, sans avoir recours au façonnement de lentilles spécifiques.

L'invention a pour objet un module d'éclairage pour un véhicule automobile, le module comprenant une première source lumineuse pour réaliser une première fonction lumineuse du véhicule automobile et une lentille de projection disposée en aval de la première source lumineuse. Le module est remarquable en ce que le module comprend un écran muni de motifs diffractifs, l'écran étant agencé entre le plan focal de la lentille et la lentille de projection, de façon à ce qu'au moins une partie des rayons lumineux issus de la première source lumineuse traversent l'écran.

L'écran est de préférence disposé de manière perpendiculaire à l'axe optique de la lentille.

De préférence, l'agencement de l'écran peut être tel qu'une première partie des rayons lumineux issus de la première source lumineuse traversent l'écran, tandis qu'une deuxième partie des rayons lumineux issus de la première source lumineuse impactent la lentille sans traverser l'écran.

Les motifs diffractifs peuvent de préférence comprendre des motifs qui dévient de manière angulaire les rayons lumineux issus de la première source lumineuse et passant par l'écran. De préférence, les rayons lumineux sont déviés d'un angle prédéterminé par rapport à l'axe optique de la lentille, l'angle étant défini par les motifs diffractifs de l'écran.

De préférence, les motifs diffractifs peuvent comprendre des motifs qui diffusent les rayons lumineux issus de la première source lumineuse passant par l'écran.

Le module peut de préférence comprendre une deuxième source lumineuse pour réaliser une deuxième fonction lumineuse du véhicule automobile, l'agencement étant tel que les rayons lumineux issus de la deuxième source lumineuse traversent également la lentille du module.

Au moins une partie des rayons lumineux issus de la deuxième source lumineuse peuvent préférentiellement traverser l'écran.

De préférence, le module peut comprendre un deuxième écran, muni de motifs diffractifs, l'écran étant agencé entre le plan focal de la lentille et la lentille de projection, de façon à ce qu'au moins une partie des rayons lumineux issus de la deuxième source lumineuse traversent le deuxième écran.

Les deux écrans peuvent de préférence être disposés à une distance égale de la lentille et dans un même plan.

De préférence, la partie de l'écran ou l'écran par lequel des rayons lumineux issus de la première source passent, et la partie de l'écran ou l'écran par laquelle des rayons lumineux issus de la deuxième source passent, peuvent comprendre des motifs diffractifs différents.

Les motifs diffractifs du premier écran peuvent de préférence induire un effet de floutage sur un faisceau lumineux qui le traverse. De préférence, les motifs diffractifs du deuxième écran peuvent dévier de manière angulaire un faisceau lumineux qui le traverse.

De préférence, les faisceaux réalisés respectivement par les rayons lumineux issus de la première et de la deuxième source peuvent être séparés par une plieuse qui partage les faisceaux selon un contour prédéterminé. La plieuse peut de préférence comprendre un cache. De préférence, la plieuse peut être une plieuse fixe ou immobile, dont la position ne peut pas être changée.

Le premier et le deuxième écran peuvent de préférence être délimités par un bord qui coïncide avec le contour prédéterminé créé par la plieuse qui partage les faisceaux issus de la première et de la deuxième source lumineuse respectivement.

De manière préférentielle, le ou les écrans peuvent être disposés à une distance située entre 0.1 et 0.5 mm du bord de la plieuse qui est orienté en direction de la lentille.

Les motifs diffractifs peuvent de préférence comprendre des motifs holographiques. Les motifs diffractifs peuvent de préférence être des motifs holographiques.

Les écrans peuvent de préférence être réalisés sous forme de pellicules ou films d'une matière plastique ou synthétique.

De préférence, au moins un des écrans peut être collé sur la surface de la lentille faisant face à la source lumineuse.

L'écran peut de manière préférée être collé à un bord de ladite face de la lentille.

La ou les sources lumineuses peuvent de préférence comprendre des éléments semi-conducteurs, notamment des diodes électroluminescentes, LED, des diodes électroluminescentes organiques, OLED, ou des diodes laser.

De préférence, une des sources lumineuses peut réaliser la fonction lumineuse « feu de route ».

Une des sources lumineuses peut préférentiellement réaliser la fonction lumineuse « feu code ».

En utilisant les mesures selon la présente invention, il devient possible de dévier de manière prédéterminée au moins une partie des rayons lumineux issus d'une source lumineuse selon une direction autre que la direction principale, la direction principale correspondant généralement avec l'axe optique d'une lentille de projection traversée par l'intégralité des rayons lumineux issus de la source lumineuse. En prévoyant un écran mince comprenant des motifs diffractifs ou holographiques, il n'est plus nécessaire de façonner des lentilles spécifiques pour atteindre le résultat désiré. Comme l'écran peut en plus être collé sur une lentille de projection préexistante, l'emplacement nécessaire à l'implémentation de la solution proposée est très réduit. La solution proposée permet en outre d'agir de plusieurs façons sur le faisceau de rayons lumineux qui traversent l'écran, en dépendance des motifs réalisés sur la surface de l'écran. Par exemple, les motifs peuvent être tels que les rayons lumineux qui le traversent soient déviés de manière angulaire dans une direction plus verticale que l'axe optique de la lentille sur laquelle l'écran est agencé. Ceci permet par exemple d'illuminer les portiques d'autoroute tout en utilisant une fonction « feux de route » du véhicule, en déviant seulement une partie des rayons lumineux du faisceau. Les motifs peuvent également être tels que les bords de l'empreinte lumineuse réalisée par le faisceau lumineux qui traverse l'écran soient rendus plus flous. Ceci permet par exemple de cacher les espaces crées entre des empreintes lumineuses par des plieuses fixes dans des modules lumineux à plusieurs sources lumineuses. Des combinaisons de différents types de motifs peuvent être utiles dans une pluralité d'autres applications spécifiques.

D'autres caractéristiques et avantages de la présente invention seront mieux compris à l'aide de la description exemplaire et des dessins parmi lesquels :
- la figure 1 montre de manière schématique une coupe latérale à travers un dispositif selon un mode de réalisation préféré de l'invention ;
- la figure 2 montre de manière schématique une coupe latérale à travers un dispositif selon un mode de réalisation préféré de l'invention ;
- la figure 3a montre de manière schématique un dispositif connu de l'art antérieur utilisant deux sources lumineuses, deux réflecteurs et une plieuse pour réaliser deux fonctions lumineuses différentes, dont les empreintes lumineuses sont complémentaires ;
- la figure 3b montre de manière schématique une empreinte lumineuse réalisée par le dispositif de la figure 3a ;
- la figure 4a montre de manière schématique une coupe latérale à travers un dispositif selon un mode de réalisation préféré de l'invention, utilisant deux sources lumineuses, un écran à motifs diffractifs, deux réflecteurs et une plieuse pour réaliser deux fonctions lumineuses différentes, dont les empreintes lumineuses sont complémentaires ;
- la figure 4b montre de manière schématique une empreinte lumineuse réalisée par le dispositif de la figure 4a ;
- la figure 5a montre de manière schématique une coupe latérale à travers un dispositif selon un mode de réalisation préféré de l'invention, utilisant deux sources lumineuses, deux écrans à motifs diffractifs, deux réflecteurs et une plieuse pour réaliser deux fonctions lumineuses différentes, dont les empreintes lumineuses sont complémentaires ;
- la figure 5b montre de manière schématique une empreinte lumineuse réalisée par le dispositif de la figure 5a ;
- la figure 6 montre de manière schématique une vue de face des écrans à motifs diffractifs du dispositif de la figure 5a.

Dans la description qui suit, des numéros de référence similaires seront utilisés pour décrire des concepts similaires à travers des modes de réalisation différents de l'invention. Ainsi, les numéros 100, 200, 300 et 400 décrivent un module d'éclairage dans quatre modes de réalisation différents conformes à l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

Des éléments bien connus dans l'état de l'art en rapport avec le fonctionnement d'un module d'éclairage pour véhicules automobile, et n'ayant aucun impact direct par rapport à la présente invention, ne seront pas décrits en détails dans le cadre de la présente description par souci de clarté de l'exposé.

Au cours de la description l'expression « source lumineuse » peut désigner de manière équivalent une source lumineuse unique, ou une source lumineuse regroupant une pluralité de sources élémentaires, par exemple de type diode électroluminescente ou LED.

L'invention a recours à des écrans munis de motifs diffractifs. Un tel écran est réalisé sur une pellicule ou un film mince par un dispositif de production en soi connu dans l'art et qui ne sera par conséquent pas décrit dans plus de détails dans le cadre de la présente description. Des techniques connues, basées sur des méthodes informatiques, permettent de fabriquer des écrans diffractifs au profil de diffusion caractérisé angulairement. Les éléments diffractifs d'un écran de diffusion comportent de préférence un diffuseur holographique, notamment basé sur un hologramme volumique généré par une source lumineuse cohérente de type laser. Un tel diffuseur holographique est par exemple décrit dans le document de brevet US 5365354.

Les éléments diffractifs d'un tel écran sont des éléments de traitement de rayons lumineux. Les dimensions des éléments diffractifs ont un ordre de grandeur proche d'une gamme de longueurs d'ondes des rayons lumineux qui les impactent. Les éléments diffractifs présentent de préférence un profil de diffusion caractérisé angulairement. En d'autres termes, les éléments diffractifs sont configurés pour diffuser la lumière reçue vers un champ angulaire prédéterminé.

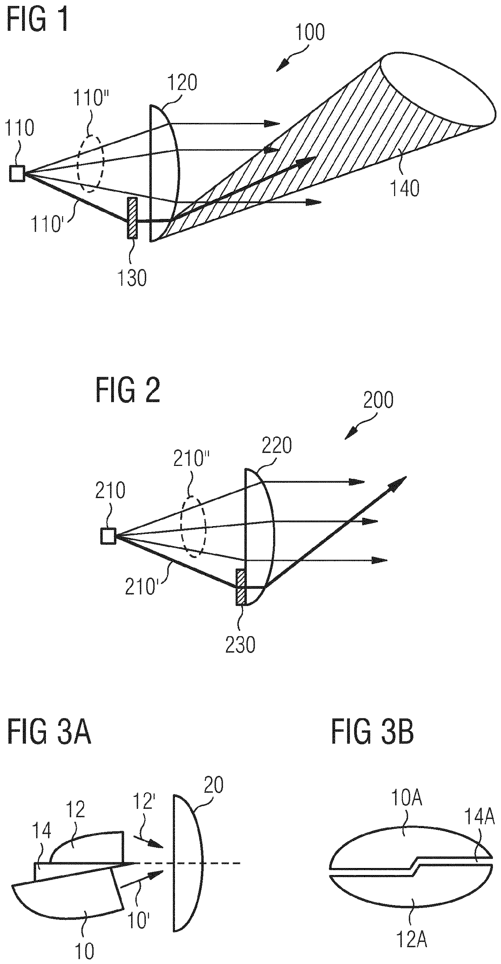

La figure 1 donne une illustration d'un module d'éclairage 100 selon un premier mode de réalisation de l'invention. Le module comprend une source lumineuse 110, par exemple de type diode électroluminescente LED. En aval de la source lumineuse, suivant la direction d'émission des rayons lumineux, se situe une lentille de projection 120 qui a pour fonction d'aligner les rayons lumineux selon une direction commune. Le module 100 équipe par exemple un feu avant d'un véhicule automobile, et il peut réaliser la fonction feux de route. Afin d'assurer l'illumination des portiques d'autoroute lorsque cette fonction est exécutée, il est intéressant de dévier au moins une partie du faisceau lumineux verticalement vers le haut, par rapport à la direction commune donnée par l'axe optique de la lentille de projection. A ce titre, le module 100 comprend un écran 130 muni de motifs diffractifs, tel qu'il vient d'être décrit plus haut. Il peut notamment s'agir d'un diffuseur holographique. Les dimensions de l'écran sont exagérées sur la figure 1, en réalité il s'agit d'un film mince de faible épaisseur. L'écran 130 est disposé entre le plan focal de la lentille de projection et la lentille de projection, de façon à ce qu'au moins une partie des rayons lumineux 110' traversent l'écran. Les motifs diffractifs de l'écran 130 sont choisis de façon à ce que cette partie des rayons lumineux 110' soit déviée de manière angulaire verticalement vers le haut, pour créer le cône lumineux 140, qui est apte à illuminer un portique autoroutier. Comme il est suffisant d'illuminer un tel portique d'un flux lumineux de 10 lm, il suffit qu'une partie proportionnellement petite des rayons lumineux 110' soit déviée de manière décrite. Il est donc suffisant de prévoir un écran à dimensions réduites par rapport à la surface d'impact de la lentille de projection. Une deuxième partie majoritaire 110" des rayons lumineux issus de la source lumineuse 110 traverse la lentille de projection 120 sans passer au préalable à travers l'écran 130, et donc sans être sujets à la déviation angulaire décrite. Il va de soi que les différents éléments montrés sur la figure 1 sont maintenus à leurs emplacements respectifs par des moyens de support non-illustrés tels que des bras ou des pieds.

La figure 2 donne une illustration d'un module d'éclairage 200 selon un deuxième mode de réalisation de l'invention. Le module comprend une source lumineuse 210. En aval de la source lumineuse, suivant la direction d'émission des rayons lumineux, se situe une lentille de projection 220 qui a pour fonction d'aligner les rayons lumineux selon une direction commune. Le module 200 comprend un écran 230 muni de motifs diffractifs, tel qu'il vient d'être décrit plus haut. Il peut notamment s'agir d'un diffuseur holographique. Les dimensions de l'écran sont exagérées sur la figure 2, en réalité il s'agit d'un film mince de faible épaisseur. L'écran 230 est collé sur la surface d'incidence de la lentille de projection 230, de façon à ce qu'au moins une partie des rayons lumineux 210' traversent l'écran. Les motifs diffractifs de l'écran 230 sont de préférence choisis de façon à ce que cette partie des rayons lumineux 210' soit déviée de manière angulaire verticalement vers le haut. Pour une pluralité d'applications envisageables, et notamment l'illumination de portiques autoroutiers, il est suffisant de prévoir un écran à dimensions réduites par rapport à la surface d'impact de la lentille de projection. L'écran est de préférence collé à proximité d'un bord de la surface de la lentille de projection. Une deuxième partie majoritaire 210" des rayons lumineux issus de la source lumineuse 210 traverse la lentille de projection 220 sans passer au préalable à travers l'écran 230, et donc sans être sujets à la déviation angulaire décrite.

La figure 3a montre un dispositif connu de l'état de l'art, tel qu'il est décrit en détail par exemple dans le document de brevet EP 2302292 A1. Le dispositif comprend deux réflecteurs à sections généralement semi-elliptiques, qui sont configurées de manière à diriger les rayons lumineux d'une première et d'une deuxième source lumineuse respectivement en direction d'une lentille de projection. Les références 10 et 12 désignent les deux ensembles source lumineuse/réflecteur respectivement. La première source 10 est destinée à réaliser la fonction feux de route (« high beam ») d'un véhicule, tandis que la deuxième source lumineuse 12 est destinée à réaliser la fonction code (« low beam »). En mode feux de route, les deux sources lumineuses du module sont allumées et les rayons lumineux 10', 12' issus des deux sources passent à travers la lentille de projection 20. L'empreinte lumineuse formée par les deux sources a une forme généralement elliptique. L'empreinte est indiquée sur la figure 3b et correspond au contour commun des plages 10A et 12A. La plage 10A correspond à l'empreinte réalisée lorsqu'uniquement la source lumineuse 10 est allumée. La plage 12A correspond à l'empreinte réalisée par la source lumineuse 12, qui réalise à elle seule la fonction code. Afin de séparer les deux empreintes de manière conforme à la réglementation une plieuse 14 ou cache est interposée entre les deux sources lumineuses. L'épaisseur de la plieuse 14 crée l'interstice 14A non-illuminé et visible sur la figure 3b. La forme de l'interstice est donnée par la géométrie particulière de la plieuse 14 utilisée. Il est intéressant que les mesures selon la présente invention permettent de cacher cet interstice 14A sans avoir recours à des plieuses mobiles ou d'autres éléments mécaniques complexes et sensibles, tels qu'ils sont connus dans l'art.

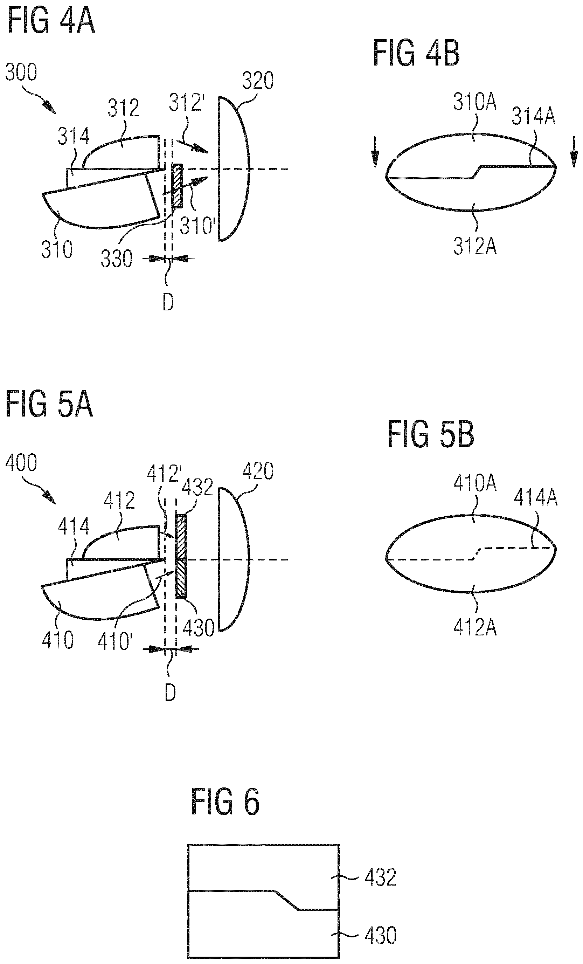

La figure 4a montre un module d'éclairage 300 selon un troisième mode de réalisation de l'invention. Le module comprend une première source lumineuse 310, et une deuxième source lumineuse 312. Il s'agit par exemple de sources lumineuses de type diode électroluminescente LED. La configuration générale de la figure 3a est reprise, c'est-à-dire que les sources lumineuses sont disposées à l'intérieur de réflecteurs généralement semi-elliptiques, configurés pour réfléchir les rayons lumineux en direction de la lentille de projection 320. D'autres configurations des deux sources et/ou réflecteurs sont néanmoins envisageables sans pour autant sortir du cadre de la présente invention. A titre exemplaire, la source 310 est destinée à réaliser une fonction feux de route, tandis que la source 312 réalise une fonction code du véhicule automobile. Afin de séparer les deux empreintes de manière conforme à la réglementation une plieuse 314 ou cache est interposée entre les deux sources lumineuses, de manière similaire au dispositif de la figure 3a. Le module 300 comprend un écran 330 muni de motifs diffractifs, tel qu'il vient d'être décrit plus haut. Il peut notamment s'agir d'un diffuseur holographique. Les dimensions de l'écran sont exagérées sur la figure 4a, en réalité il s'agit d'un film mince de faible épaisseur. L'écran 330 est disposé entre le plan focal de la lentille de projection et la lentille de projection, de façon à ce qu'au moins une partie des rayons lumineux 310' issus de la première source lumineuse, et de préférence l'intégralité, traversent l'écran. Les motifs diffractifs de l'écran 330 sont choisis de façon à ce que cette partie des rayons lumineux 310' soit déviée de manière angulaire verticalement vers le bas. Les rayons lumineux 312' issus de la deuxième source lumineuse, impactent la lentille de projection 320 sans traverser préalablement l'écran à motifs diffractifs. L'empreinte lumineuse résultante est montrée sur la figure 4b. En comparant avec l'empreinte de la figure 3b, il devient apparent que l'interstice entre les plages 310A (créée par la première source 310) et 312A (créée par la deuxième source 312) n'est plus apparent lorsque les deux sources sont allumées. En effet, le faisceau lumineux 310' issu de la première source est dévié de manière angulaire vers le bas, de manière à venir recouvrir l'interstice qui est dû à l'épaisseur de la plieuse 314. Il est donc possible de masquer la représentation visuelle de la plieuse en utilisant l'écran 330 conforme à l'invention. De préférence, l'écran 330 se situe à une distance D de l'ordre de 0,5 mm du bord de la plieuse 314. Avec une déviation angulaire de 6°, on peut en générale compenser l'épaisseur de la plieuse. Avec une déviation angulaire verticale de 60° par rapport à l'horizontale, on peut réaliser un recouvrement de l'ordre de 1°.

La figure 5a montre un module d'éclairage 400 selon un quatrième mode de réalisation de l'invention. Le module comprend une première source lumineuse 410, et une deuxième source lumineuse 412. Il s'agit par exemple de sources lumineuses de type diode électroluminescente LED. La configuration générale de la figure 4a est reprise, c'est-à-dire que les sources lumineuses sont disposées à l'intérieur de réflecteurs généralement semi-elliptiques, configurés pour réfléchir les rayons lumineux en direction de la lentille de projection 420. D'autres configurations des deux sources et/ou réflecteurs sont néanmoins envisageables sans pour autant sortir du cadre de la présente invention. A titre exemplaire, la source 410 est destinée à réaliser une fonction feux de route, tandis que la source 412 réalise une fonction code du véhicule automobile. Suivant la réglementation actuellement en vigueur, le faisceau « route » peut être flouté d'avantage que le faisceau « code ». Afin de séparer les deux empreintes de manière conforme à la réglementation une plieuse 414 ou cache est interposée entre les deux sources lumineuses, de manière similaire au dispositif de la figure 4a. Le module 400 comprend un premier 430 et un deuxième écran 432, les écrans étant munis de motifs diffractifs, tels qu'ils viennent d'être décrit plus haut. Il s'agit par exemple de diffuseurs holographiques. Les dimensions des deux écrans sont exagérées sur la figure 5a, en réalité il s'agit de films minces de faible épaisseur. L'écran 430 est disposé entre le plan focal de la lentille de projection et la lentille de projection, de façon à ce qu'au moins une partie des rayons lumineux 410' issus de la première source lumineuse, et de préférence l'intégralité, traversent l'écran. Les motifs diffractifs de l'écran 430 sont choisis de façon à ce que cette partie des rayons lumineux 410' soit diffusée de façon importante en traversant l'écran 430. L'écran 432 est disposé entre le plan focal de la lentille de projection et la lentille de projection, de façon à ce qu'au moins une partie des rayons lumineux 412' issus de la première source lumineuse, et de préférence l'intégralité, traversent l'écran. Les écrans 432 et 430 sont alignés dans un même plan de manière perpendiculaire à l'axe optique de la lentille de projection 420, ou, de manière équivalente, en parallèle avec la surface d'incidence plane de la lentille de projection 420. Les motifs diffractifs de l'écran 432 sont choisis de façon à ce que cette partie des rayons lumineux 420' soit diffusée en traversant l'écran 432, mais leur diffusion étant moindre que celle induite par l'écran 430 sur les rayons lumineux 410' issue de la première source lumineuse 410.

L'empreinte lumineuse résultante est montrée sur la figure 5b. En comparant avec l'empreinte de la figure 3b, il devient apparent que l'interstice 414A entre les plages 410A (créée par la première source 410) et 412A (créée par la deuxième source 412) n'est plus apparent lorsque les deux sources sont allumées. En effet, le faisceau lumineux 410' issu de la première source est flouté par diffusion, afin d'atténuer la séparation 414A entre les deux plages 410A et 412A. Le faisceau lumineux 412' issu de la deuxième source 412 est également flouté par diffusion, mais il permet de réaliser la netteté de coupure souhaitée lorsqu'uniquement la fonction « code » est utilisée. Il est donc possible de masquer la représentation visuelle de la plieuse en utilisant l'écran 330 conforme à l'invention. Il va de soi qu'au lieu de deux écrans distincts 430, 432, il est possible de mettre à disposition un écran unique ayant deux parties distinctes à motifs diffractifs différents, les deux parties correspondant aux emplacements et aux propriétés des écrans 430 et 432 tels qu'ils viennent d'être décrits. Avantageusement, la coupure entre les écrans coïncide avec la coupure réalisée par le bord de la plieuse 414, ce qui est montré dans la vue de face des écrans 430 et 432 de la figure 6. Cette disposition permet de s'assurer que les faisceaux issus des deux sources 410 et 412 passent respectivement à travers les écrans 430 et 432.

## Revendications

1. Module d'éclairage (100, 200, 300, 400) pour un véhicule automobile, le module comprenant une première source lumineuse (110, 210, 310, 410) pour réaliser une première fonction lumineuse du véhicule automobile et une lentille de projection (120, 220, 320, 420) disposée en aval de la première source lumineuse, **caractérisé en ce que** le module comprend un écran (130, 230, 330, 430) muni de motifs diffractifs, l'écran étant agencé entre le plan focal de la lentille et la lentille de projection, de façon à ce que, quand la première source lumineuse émet des rayons lumineux (110', 210', 310', 410'), au moins une partie des rayons lumineux (110', 210'. 310', 410') issus de la première source lumineuse traversent l'écran.

2. Module d'éclairage selon la revendication 1, **caractérisé en ce que** l'agencement de l'écran (130, 230) est tel qu'une première partie (110', 210') des rayons lumineux issus de la première source lumineuse (110, 210) traversent l'écran, tandis qu'une deuxième partie (110", 210") des rayons lumineux issus de la première source lumineuse impactent la lentille (120, 220) sans traverser l'écran.

3. Module d'éclairage selon une des revendications 1 ou 2, **caractérisé en ce que** les motifs diffractifs comprennent des motifs qui dévient de manière angulaire les rayons lumineux issus de la première source lumineuse et passant par l'écran.

4. Module d'éclairage selon une des revendications 1 ou 2, **caractérisé en ce que** les motifs diffractifs comprennent des motifs qui diffusent les rayons lumineux issus de la première source lumineuse passant par l'écran.

5. Module d'éclairage (300, 400) selon une des revendications 1 à 4, **caractérisé en ce que** le module comprend une deuxième source lumineuse (312, 412) pour réaliser une deuxième fonction lumineuse du véhicule automobile, l'agencement étant tel que, quand la deuxième source lumineuse émet des rayons lumineux, les rayons lumineux issus de la deuxième source lumineuse traversent également la lentille (320, 420) du module.

6. Module d'éclairage selon la revendication 5, **caractérisé en ce qu'**au moins une partie (312', 412') des rayons lumineux issus de la deuxième source lumineuse (312, 412) traverse l'écran.

7. Module d'éclairage (400) selon la revendication 5, **caractérisé en ce que** le module comprend un deuxième écran (432), muni de motifs diffractifs, l'écran étant agencé entre le plan focal de la lentille et la lentille de projection (420), de façon à ce qu'au moins une partie (412') des rayons lumineux issus de la deuxième source lumineuse (412) traverse le deuxième écran (432).

8. Module d'éclairage selon une des revendications 6 ou 7, **caractérisé en ce que** la partie de l'écran ou l'écran par lequel des rayons lumineux issus de la première source passent, et la partie de l'écran ou l'écran par laquelle des rayons lumineux issus de la deuxième source passent, comprennent des motifs diffractifs différents.

9. Module d'éclairage (300, 400) selon une des revendications 5 à 8, **caractérisé en ce que** les faisceaux réalisés respectivement par les rayons lumineux issus de la première (310, 410) et de la deuxième source (312, 412) sont séparés par une plieuse (314, 414) qui partage les faisceaux selon un contour prédéterminé.

10. Module d'éclairage (400) selon une des revendications 7 ou 8 et selon la revendication 9, **caractérisé en ce que** le premier (430) et le deuxième écran (432) sont délimités par un bord qui coïncide avec le contour prédéterminé créé par la plieuse (414) qui partage les faisceaux issus de la première (410) et de la deuxième source lumineuse (412) respectivement.

11. Module d'éclairage selon une des revendications 9 ou 10, **caractérisé en ce que** le ou les écrans sont disposés à une distance située entre 0.1 et 0.5 mm du bord de la plieuse qui est orienté en direction de la lentille.

12. Module d'éclairage selon une des revendications 1 à 11, **caractérisé en ce que** les motifs diffractifs sont des motifs holographiques.

13. Module d'éclairage selon une des revendications 1 à 12, caractérisé en ce le ou les écrans sont collés sur la surface de la lentille faisant face à la source lumineuse.

14. Module d'éclairage selon la revendication 12, **caractérisé en ce que** le ou les écrans sont collés à un bord de ladite face de la lentille.

15. Module d'éclairage selon une des revendications 1 à 14, **caractérisé en ce que** la ou les sources lumineuses comprennent des éléments semi-conducteurs, notamment des diodes électroluminescentes, LED.

16. Module d'éclairage selon une des revendications 1 à 4 et 6 à 15 et selon la revendication 5, **caractérisé en ce que** une des sources lumineuses réalise la fonction lumineuse « feu de route ».

17. Module d'éclairage selon une des revendications 1 à 4 et 6 à 16 et selon la revendication 5, **caractérisé en ce qu'**une des sources lumineuses réalise la fonction lumineuse « feu code ».
